Europäisches Patentamt

(19) European Patent Office    (11) Publication number: **0 000 281**

Office européen des brevets     **B1**

(12)   **EUROPEAN PATENT SPECIFICATION**

(45) Date of publication of patent specification: **23.09.81**    (51) Int. Cl.³: **B 62 D 21/02,**
                                          **B 62 D 49/00, E 02 F 3/80**

(21) Application number: **78300094.6**

(22) Date of filing: **27.06.78**

(54)   Frame for supporting implements on a vehicle and method of making same.

(30) Priority: **29.06.77 US 811407**

(43) Date of publication of application:
**10.01.79 Bulletin 79/1**

(45) Publication of the grant of the European patent:
**23.09.81 Bulletin 81/38**

(84) Designated Contracting States:
**DE FR GB**

(56) References cited:
**FR - A - 993 712**
**FR - A - 2 291 061**
**GB - A - 405 507**
**GB - A - 1 178 387**
**US - A - 2 345 351**
**US - A - 2 801 863**
**US - A - 3 047 170**
**US - A - 3 725 996**
**US - A - 3 730 545**

(73) Proprietor: **MASSEY-FERGUSON INC.**
**a Maryland Corporation 12601 Southfield Road**
**Detroit Michigan 48232 (US)**

(72) Inventor: **Paul, David S.**
**41882 Sutters Lane**
**Northville Michigan 48167 (US)**

(74) Representative: **Jones, David Bryn**
**Patent and Trade Marks Department Massey-Ferguson**
**Stareton, near Kenilworth Warwickshire CV8 2LJ (GB)**

Courier Press, Leamington Spa, England.

Frame for supporting implements on a vehicle and method of making same

Technical Field

This invention relates to vehicles for supporting earth handling implements such as, for example, an industrial tractor provided with a front end loader and a rear mounted backhoe. Conventionally such implements are carried on a frame secured to the vehicle chassis and the present invention is concerned with the construction of such frames.

Background Art

Earth handling implements have been carried on such vehicles using basically three categories of frame. The earliest loaders on agricultural tractors were supported by attachable and detachable frames connected to the tractor chassis and dependent solely on the strength of the tractor chassis for their load carrying capability. The second category of frame is the semi-integrated type which is permanently attached to the tractor chassis and particularly the axle housing while having sufficient structure in itself to partially support the implements attached thereto and absorb the loadings placed on the implements thereby reducing the loads on the tractor chassis. Examples of such a frame are disclosed in U.S. Patents 2931525 and 3489303. The latter patent discloses a frame which is rigidly attached at the rear to the back axle of the tractor chassis and is pivotally connected at the front to the front of the chassis to permit the frame to twist and absorb torsional stresses. The third category of implement frame is the integrated frame which consists of a frame fabricated from the start to receive vehicle components such as axles, differential, transmission and engine, all of which are supported from and by the frame which is the support unit for all other components and assemblies including the vehicle wheels. An example of such a frame is disclosed in U.S. Patent 3047170 in which the front and rear sections of the frame are rigid while the midsection permits a degree of flexing in bending and torsion.

No previous constructions have successfully provided a vehicle with a semi-integrated frame which is capable of withstanding both the bending and torsional loads imposed on the frame by, for example, the operation of a front end loader and a rear mounted backhoe without resorting to excessively heavy frame constructions.

Disclosure of Invention

It is an object of the present invention to provide a vehicle with an improved frame of the semi-integrated type referred to above.

According to one aspect of the present invention there is provided a vehicle for supporting implements on a vehicle comprising a chassis provided by a rigid unitary assembly formed from an engine, transmission housing and back axle housing and a frame for supporting said implements and attached to said chassis, said frame comprising a pair of rails arranged to extend longitudinally of the vehicle in transversely spaced apart relation, first and second end portions on each rail, a pair of tower structures attached one to each rail to extend upwardly from the rails at locations intermediate the end portions thereof, first interconnecting means interconnecting and maintaining said first end portions of the rails in a fixed transversely spaced apart relation, second interconnecting means interconnecting and maintaining said second end portions in a fixed transversely spaced relation, first attachment means for connecting said first end portions to said chassis and second attachment means for attaching each rail to said back axle housing intermediate said end portions, said vehicle being characterised in that a stabilizing means is arranged to extend between said tower structures, and in that said first and second attachment means, said stabilizing means and said rails are arranged to flex to permit constrained movement of the rails and tower structures relative to said chassis under torsional loading and bending to permit load sharing between the chassis and frame.

The towers of the above frame are used to provide support for the lift arms and operating cylinders of a front end loader and the second interconnecting means may comprise a ballast weight if the vehicle is to be used as a loader only or part of a backhoe structure if the vehicle is to include a backhoe.

The frame arrangement described above differs from previous constructions in the flexible nature of the attachment means, stabilizing means and rails. This enables the frame to dissipate the bending and torsional loading imposed on the frame by the implements without locally overloading the chassis. Thus the loading can be shared between the frame and chassis so that the strength of the frame can be augmented by the strength of the chassis in a manner which does not give rise to chassis failures and which enables the weight of the frame to be kept to a minimum.

For example, the stabilizing means between the towers ensures that when the towers flex, forces are transmitted between the towers by the stabilizing means to equalize the loading on the towers and maintain a spaced relationship between the towers to ensure that the loader does not bind due to tower misalignment.

The torsional characteristics of the frame can be varied by adjusting the flexibility of the stabilizing means. The stabilizing means may include a stabilizing plate having a hole therein generally centrally located to relieve stress therein resulting from torsional loading of the frame.

The stabilizing plate may have a generally Z-shaped cross-section when cut by a vertical plane extending generally longitudinally of the frame. The hole in the stabilizing plate is preferably elongated in shape, the direction of elongation being transverse relative to said frame.

The second attachment means preferably includes L-shaped flexible members which allow relative twisting movement between said rails and back axle housing during torsional loading of the frame, one leg of each L-shaped member being connected to its associated rail and the other leg to the back axle housing. This further improves the frame's ability to absorb torsional loading and provide load sharing between the chassis and frame.

The second end portions of the rails are preferably provided with fastening means for securing said second interconnecting means in position, said fastening means including means for carrying shear loads. For example, said shear load carrying means may comprise pins engaging said rails and second interconnecting means. These pins may be tapered at one end to facilitate engagement of the rail ends with the second interconnecting means.

To allow easy assembly of the frame and interchangeability of the various possible forms of second interconnecting means, the fastening means preferably includes bolts for detachably securing the second interconnecting means to the rails.

The means for connecting the rails to the chassis may comprise two rail brackets, one attached to each rail, and a chassis mounting plate attached between the rail brackets.

Preferably the first interconnecting means comprises a steering axle support saddle extending between said first end portions.

The rails of the frame are preferably structural channel members. These rails may be orientated with their bases extending substantially vertically and their side flanges extending substantially horizontally, the steering axle support saddle being arranged to be secured to the bottom side flanges of the rails.

A further important feature of the frame is that the rails diverge apart so that the frame has a tapering configuration when viewed in plan, the frame having a greater width at its second end portions than at its first end portions. This feature is of importance in enhancing the stability of the frame when supporting a backhoe structure. It removes the need to fabricate the rails with off-sets or bends in order to achieve the necessary frame width at the rear of the frame.

The invention also provides a method of assembling a vehicle in accordance with the first aspect of the invention.

Brief Description of the Drawings

One embodiment of the present invention will now be described, by way of example only, with reference to the accompanying drawings in which:—

Figure 1 is a perspective view of a vehicle equipped with an implement frame in accordance with the present invention;

Figure 2 is an elevational view of just the frame of the vehicle in Figure 1;

Figure 3 is a plan view of the frame in Figure 2;

Figure 4 is a cross-sectional view along line 4—4 of Figure 3;

Figure 5 is a partial cross-sectional view along line 5—5 of Figure 2;

Figure 6 is a partial cross-sectional view along lines 6—6 of Figure 3;

Figure 7 is a cross-sectional view along lines 7—7 of Figure 6;

Figure 8 is a schematic view of the frame portion of Figure 6;

Figure 9 is a cross-sectional view along lines 9—9 of Figure 3, and

Figure 10 is a schematic view of a portion of the frame and vehicle of Figure 1.

Best Mode of Carrying Out Invention

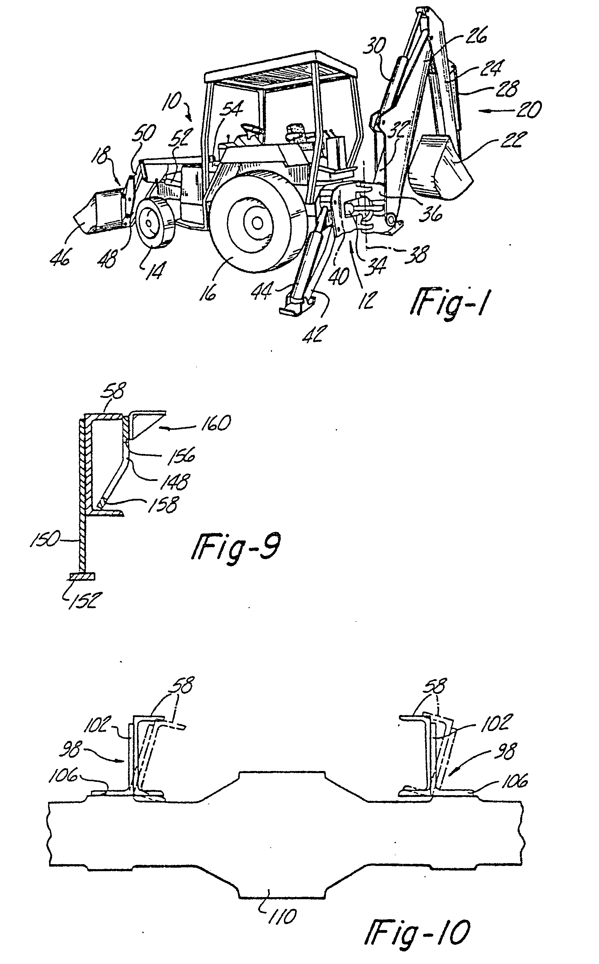

Referring to Figure 1 of the drawings there is generally designated an industrial tractor 10 having an implement frame 12 thereon. The tractor 10 is equipped with front and rear wheels 14 and 16. The forward end of the tractor 10 is equipped with a front end loader 18 and a backhoe 20 is located at the rear of the tractor.

The backhoe 20 includes a bucket 22 pivotally connected to one end of a dipper stick 24 which in turn is pivotally connected at its upper end to a boom 26.

A bucket 22 is swingable through a vertical arc relative to the dipper stick 24. A cylinder 28 is pivotally connected between the bucket 22 and dipper stick 24 for this purpose. The dipper stick 24 is pivoted through a vertical arc relative to the boom 26 by operation of a second cylinder 30 pivotally connected between the dipper stick 24 and the boom 26. The boom 26 is also swingable through a vertical arc and a third cylinder 32 is used to achieve this swing being pivotally connected between the boom 26 and the backhoe 20.

The boom 26 is further swingable through a horizontal arc by virtue of a pair of cylinders, one 34 of which is visible in Figure 1, located on either side of the boom 26 and pivotally connected between the boom 26 and the backhoe 20.

To accommodate the horizontal swing movement the boom 26 is pivotally mounted on a swing casting 36 which in turn is pivotally mounted on part of a backhoe structure 40 for pivotting about a vertical axis 38. The backhoe structure 40 is equipped with pivotally mounted stabilizers, one 42 of which is visible in Figure 1. These stabilizers are each mounted for movement through a vertical arc by means of their own stabilizer cylinder 44 pivotally connected between the stabilizer 42 and the backhoe structure 40. In Figure 1 the stabilizer 42 is seen in the extended position whereby both sides of the backhoe structure 40 are adequately supported by engagement of the stabilizers 42 with the ground.

At the front of the vehicle the loader 18 has a bucket 46 pivotally mounted at the forward end of loader arms, one 48 of which can be seen in Figure 1, which are located on either side of the tractor. The bucket 46 extends between the load arms 48 and is pivoted thereon. Each loader arm 48 is equipped with pivotally mounted cylinder 50 which is pivotally connected to the bucket 46 to change the bucket position or angle.

The elevation and lowering of the arms 48 is brought about through a second cylinder 52 for each load arm 48, the second cylinder 52 being connected at one end in a pivotal fashion with the load arm 48 with which it is associated and at the other end to the implement frame 12. The implement frame 12 is equipped with a subframe or tower 54 which provides a pivotal mounting for the rear end of the load arms 48.

The tractor 10 illustrated is a conventional agricultural type having an engine, transmission housing and back-axle housing which are bolted together to form the chassis, the sump of the engine being a structural component and constituting part of the chassis. Power is delivered from the engine to a differential located in the back axle housing via the transmission. The back axle housing provides support for the rear wheels 16 and the front wheels 14 are mounted on the chassis via the implement frame 12.

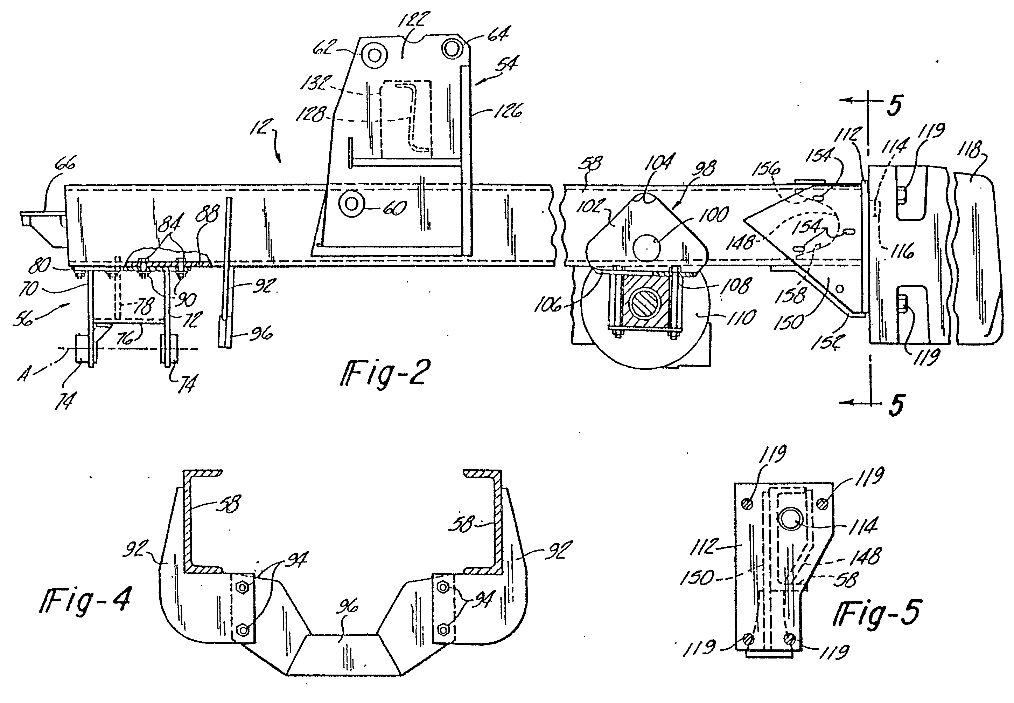

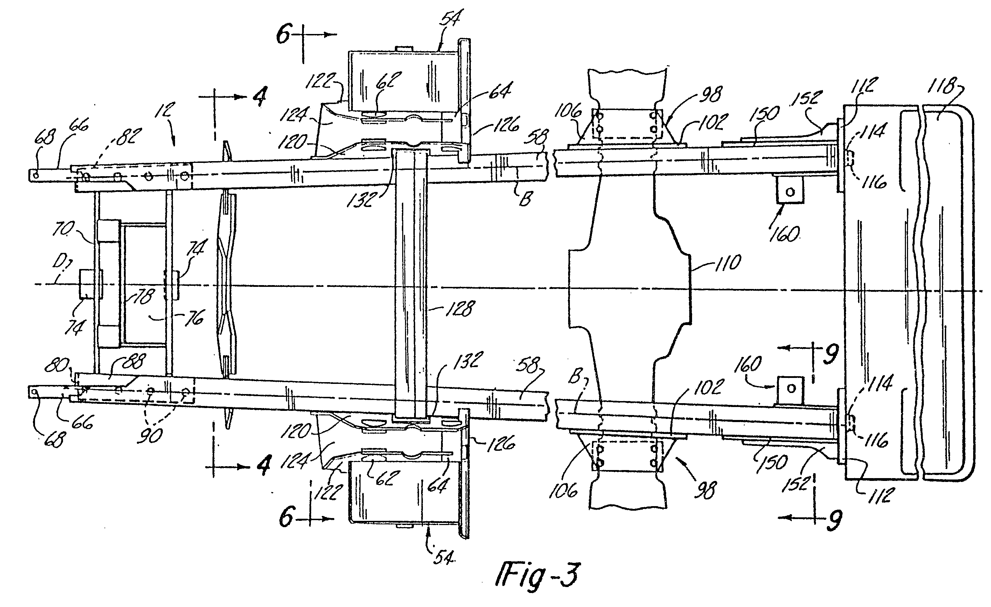

Figures 2 and 3 show the implement frame 12 is equipped with a front axle support portion 56 which supports a conventional steering mechanism actuated by means of a steering wheel as illustrated in Figure 1.

It will be appreciated that, with the backhoe stabilizers 42 and bucket 22 as well as the front end loader 18 elevated relative to the ground, the tractor 10 in Figure 1 may be conveniently moved from one place to another under its own power as developed by its motor. When the loader 18 is being used the forces directed towards the implement frame 12 occur both from driving the vehicle 10 into a work pile with the bucket 46 orientated to fill the bucket 46 and by operation of the cylinders 50 and 52 on the bucket 46 and lift arms 48 in curling the bucket 46 and elevating the arms 48 as the work load is being engaged.

The operation of the backhoe 20 is usually accompanied by extension of the stabilizers 42 to engage the ground whereby the backhoe structure 40 and stabilizers 42 receive the forces resulting from use of the backhoe 20 rather than the rear wheels 16 and the vehicle chassis therefrom. The operation of the backhoe 20 may result in a wide variety of stresses being applied to the tractor 10 but most particularly the implement frame 12. Torsional stresses arise when the backhoe 20 is pivoted horizontally as to dig on one side or the other of the tractor 10 rather than directly to the rear thereof. The above stress phenomenon is not limited to the operation of the backhoe 20 but may also be present in the operation of the front end loader 18 when one side of the bucket 46 encounters the load so as to eccentrically load the bucket 46 and implement frame 12.

Bending stress is also developed by the cantilever arrangement of the two implements 18 and 20 mounted on either extreme of the implement frame 12. In the past, where loader frames have been supplemented with rear counterweight in order to counterbalance the load on the front of a tractor, the bending stress transmitted to the tractor chassis to which the loader frames were previously attached as load receiving members resulted in localized bending stresses intermediate the length of the vehicle. Extreme cases resulted in actually breaking the vehicle in two. The above problem could be solved by using longitudinal frame members sufficiently strong so as not to bend and thereby not stress the chassis of the tractor, but such members were found to be excessively heavy. The addition of a backhoe in this operation imposed additional and extremely serious problems of localised bending stress. For example, where both implements, the front end loader and the backhoe, were used in conjunction to extract a mired vehicle the resultant bending stresses were a complete reverse of those experienced under normal operation conditions.

It is to be appreciated that the above operation is a desirable one for a vehicle of an industrial nature which should be suitable for use on job sights even where ground conditions are soft. Thus, the implement frame 12 should be suitable for enabling the front and rear implements 18 and 20 to literally raise the tractor 10 off the ground.

The prior art structures had addressed themselves in the main to the problem of the bending stresses to be accommodated in the implement frame. Attempts to deal with the torsional stresses which tend to twist the implement frame longitudinal members, or rails, about their longitudinal axis have been much less common. U.S. patents 3489303 and 3047170 referred to above are examples of frames including some provision for the absorbtion of torsional stresses.

Previous attempts to accommodate bending and/or torsional stresses have tended to result in implement frames of a heavy and/or complex nature.

In the present structure the above is not the case and the advantageous operation of the implement frame 12 being flexible in torsion as well as in bending is achieved through employment of a semi-integrated frame construction of an arrangement which will now be described with particular reference to Figures 2—9.

Referring to Figures 2 and 3 the primary longitudinal members or rails 58 of the frame 12 illustrated are seen to be structural channel-section members to which the tower assemblies 54 are welded. The towers contain bossed apertures for receiving pivots for the lift arm cylinders 52 in the lower bosses 60, for the lift arms 48 themselves in the upper left hand bosses 62, and for a member of the bucket linkage in the upper right hand boss 64. The towers 54 are located intermediate the ends of the rails 58.

The front end of each rail 58 has an angle member 66 welded thereto and extending therebeyond with apertures 68 therein for receiving the nose and grille of the tractor 10. The front axle support saddle 56 constitutes a first interconnecting means extending between the rails 58. The saddle 56 extends downwardly from the front of the rails 58 and includes front and rear mounting plates 70, 72 having bosses 74 centrally mounted therein on the longitudinal centre line of the frame 12 to provide a pivot axis A for the oscillation of the front axle, a C-shaped stiffener 76 extends longitudinally between the front and rear plates 70 and 72 with a gusset 78 extending transversely thereof acting as a stiffener. A pair of flange plates 80 and 82 have a series of apertures 84 corresponding to apertures 86 in the lower legs 88 of the frame rails 58 whereby bolts 90 may be passed through to bolt the axle support saddle 56 to the rails 58.

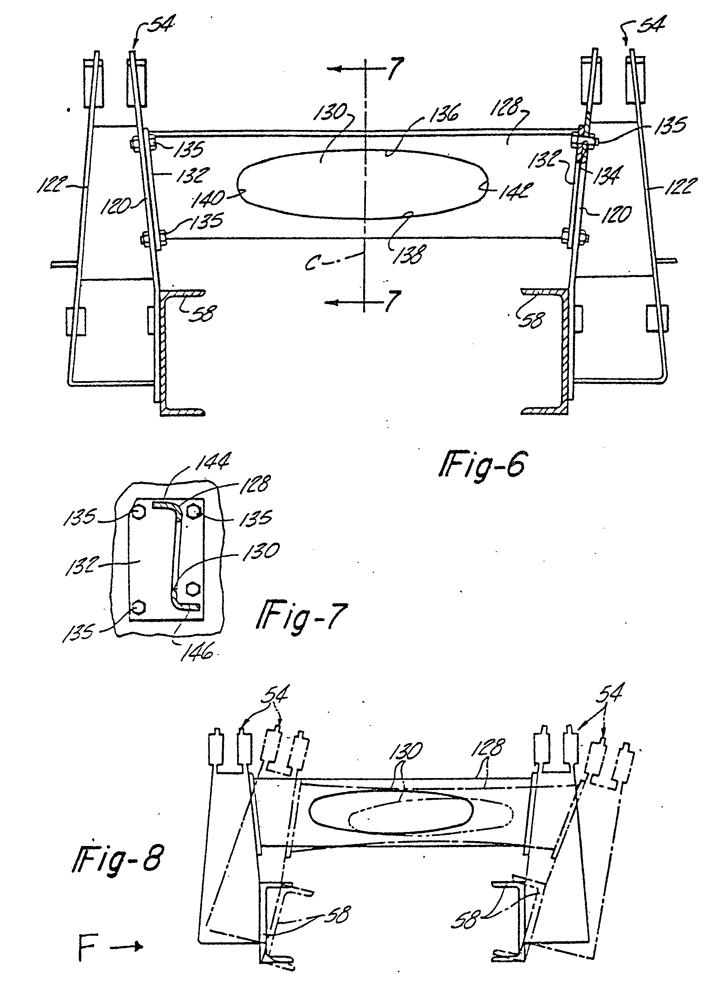

Between the front axle saddle 56 and the towers 54 and engine support member in the form of a L-shaped bracket 92 extends downwardly from each rail 58 with apertures 94 in the lower leg thereof for receiving means for fastening the bracket 92 to a mounting plate 96 on the engine of the tractor 10 as best seen in Figure 4. The L-shaped brackets and plate 96 provide rail connecting means to the engine which thus firmly attach the frame 12 to the tractor chassis while at the same time accommodating some flexing of the rail about its longitudinal axis B and corner to corner deflection of the frame 12 in the horizontal plane due to eccentric loads.

Between the tower 54 and the rear end of the frame 12, axle housing attachment means are welded to the rails 58 taking the form of L-shaped ears 98. The upstanding leg 102 of each ear 98 has a recess 100 to increase the weld area of the member. Thus each ear 98 is welded to the associated rail 58 around the entire periphery of the recess 100 as well as along the two sides 104 forming the upper apex of the leg 102. The welds along the sides 104 terminate a point just short of the bottom of the rail 58 to leave a portion at the bottom of the channel is free of weld. The ears 98 each have a horizontal leg 106 with apertures 108 therein for receiving fastening means for fixedly attaching the leg 106 to the axle housing 110 of the tractor 10. The legs 106 together with the unwelded portion of the upper legs 102 provide for flexibility between the axle housing 110 and the rails 58. Thus, again the rails 58 may flex about their longitudinal axes B under torsional loading.

At the rear of each rail 58 a face plate 112 is welded to the butt end thereof. Each plate 112 has a pin 114 welded in an aperture therein with the end of the pin 114 extending from the plate 112 and having a taper 116 thereon for guiding the pin 114 into a counterweight 118 attached thereto.

The counterweight 118, illustrated in Figures 2 and 3, is an alternate to the embodiment in Figure 1 replacing the centre mount backhoe 20 illustrated in Figure 1. As a further alternative, a side shift backhoe structure could also be mounted on the present frame. All of these alternatives provide second interconnecting means for interconnecting the rear ends of the rails.

All the above assemblies and their loads are supported in shear by the pins 114 in the face plates 112 and are attached by four bolts 116 passing through apertures 118 in the face plates 112 as best illustrated in Figure 5. The counterweight 118 at the rear of the vehicle and the front axle support saddle 56 at the front of the frame 12 form a box structure wherein the rail 58 between the two points is able to flex under torsional stress about its longitudinal axis B and able to flex under bending stress between the rear axle housing 110 connection and the rail connection to the engine in the manner of a simply supported beam supported at the above two connections.

The box structure formed by the rails 58, the axle support 56 and the counterweight 118 is clearly shown in Figure 3.

In addition each tower structure 54 as can be seen from Figures 3 and 6 consists of an inner upwardly extending plate 120 welded to the outside of the associate rail 58. An outer plate 112 of the same configuration as the inner plate 120 extends over the face of the inner plate 120 being terminated just short of the bottom thereof by bending the plate 122 inwardly and extending it to the inner plate 122 to which it is welded. A horizontal gusset plate 124 extends between the inner and outer plates 120 and 122 to maintain them spaced apart and a back plate 126 extending over the total height of the tower 54 completes the assembly. The bosses 62 and 60 for the lift arm 48 and lift arm cylinder 52 are provided in both the inner and outer plates 120 and 122 with the bosses 60 for the lift arm cylinders 52 passing through both the inner plate 120 and the web of the rail 58. The bosses 64 for the lift arm link 63 on the other hand are continuous extending between the inner and outer plates 120 and 122.

Figure 3 further illustrates a Z-shaped plate 128 which provides a stabilizing means between the towers 54. In the illustrated embodiment the plate 128 has a stress relief hole 130 therein as best illustrated in Figures 6 and 7. Although the plate 128 stabilizes the towers 54 it allows enough freedom for flexure of the rails 58 on which the towers 54 are mounted under torsional stress, see figure 8. The plate 128 has opposite hand end plates 132 welded to each end thereof with apertures 134 therein for receiving bolts for bolting the end plates 132 and thereby the plate 128 to the towers 54. In Figures 6 and 7, the stress relief hole 130 in the plate 128 can be seen to be elongated with the upper and lower sides 136 and 138, forming its border, being longer than the sides 140 and 142 which complete the hole's boarder. Thus, a full cross-section of plate 128 exists adjacent the end plates 132 to act as a reinforcing stiffener because the stabilizing means is symmetrical about line C. At the same time, the configuration of the hole 130 provides a lesser cross-section of material at the top and bottom of the plate 128 where the line C intersects it to permit flexing of these portions when the rails 58 flex in torsion due to transverse deflection of the towers 54 under eccentric loading of the frame 12. The lips 144 and 146 in Figure 7 together with the above lesser cross-section of the plate 128 form angle reinforcements uniform in cross section between the towers 54 to transfer loads therebetween and maintain the spacing between the towers 54 necessary for the desired operation of the loader 18 via the arms 48 and linkage 63 attached to the towers 54. Thus, the plate acts as an equalizer for forces on the towers 54.

In Figure 8 a schematic example is given of one type of tower deflection which may occur being exaggerated for purposes of illustration. Note the twisting of the rails 58 under the loading created by the force F in the direction indicated by the arrow. The force is a component resulting from eccentric loading on the frame 12 from, for example, use of one corner of the loader bucket 46 as described above. Another example would be deflection of the towers 54 relative to each other in the longitudinal direction of the rails 58 causing the plate 128 to twist. In this instance, the lesser cross section and lips 144 and 146 forming the angle reinforcements would be able to twist in a manner similar to that illustrated in Figure 8 for the rails 58. In each case the ability of a structural member to deflect prevents excessive stress on the plate 128 to tower 54 connection to avoid tearing the structure apart.

In Figures 2 and 3 at the rear of the frame 12 the face plate 112 can be seen to be reinforced by inner and outer gusset plates 148 and 150 as well as a bottom gusset plate 152 as further illustrated in Figure 9. The bottom gusset plate 152 extends over the outer gusset plate 150 and to both the rail 58 and the face plate 112. The outer gusset plate 150 has three slotted apertures 154 for receiving alignment pins and the inner gusset plate 148 can be seen to have a bend in it to permit the plate to extend from the outer portion of the rail 58 upper leg to the inner portion of its lower leg. In Figure 2 the inner gusset plate 148 can be seen to have two legs 156 and 158 which extend towards the front of the frame 12 and are tapered in the direction of their extension. A gusseted angle member in Figure 9 is attached to the inner gusset plate 148 to provide a bracket 160 for supporting tractor components.

In Figure 10 a schematic example is given of one type of rail deflection which occurs under torsional loading of the frame 12, being exaggerated for purposes of illustration. It can be seen that the twisting of the rails 58 causes deflection of the L-shaped ears 98 to prevent exessive stresses from arising and/or excessive loading of the axle housing 110.

In Figure 3 the rails 58 can be seen to diverge from front (left) to rear (right) to accommodate the gauge of the front wheels 14 while providing as wide, and therefore as stable, a connection as possible to receive the loading from the backhoe 20. The frame thus has a tapering configuration when viewed in plane. The rear ends of the rails 58 are fixed in spaced apart relation in a plane transverse to the longitudinal axis D of the tractor 10 and its frame 12 by means connecting the ends of the rails 58, such as the counterweight 118 or backhoe structure 40, to maintain the rails 58 in an outwardly diverging unbroken line from each other.

Previously, the frames for supporting implements have either not taken advantage of a widened backhoe connection by maintaining the gauge of the front wheels, or where the gauge of the frame was changed the frame was fabricated with accommodating offsets or bent to achieve the same result. In both above cases the bends or fabricated joints presented points for high stresses under loading and if torsional stress were allowed to twist the frame members as in the present application there would be likelihood of failure of the frame at these points.

The frame 12 is assembled as follows. First a rail 58 and a tower 54 are secured in a jig to align these components in their correct relative positions, the bosses 60—64 being used for alignment purposes. The tower and rail are then welded together to form a first subassembly which also includes the bracket 92, 160, member 60, plate 112, pin 114 and ear 98. This process is then repeated to produce a second subassembly consisting of the rail and tower for the other side of the frame 12.

These two subassemblies are then moved to a vehicle chassis and are loosely bolted to the back axle 110 using bolts extending through apertures 108 in the ears 98.

The front ends of the rails 58 are then secured in a jig at the correct spacing and the rear ends of the rails are then canted outwardly, that is moved away from the longitudinal axis D of the frame to give the desired tapering frame shape. The rear ends of the rails are then held in their correct relative positions by a further jig which extends between the rear ends of the rails and uses the pins 114 for location.

The plate 128 is then secured between the towers 54 and bolted up tight. The mounting plate 96 and axle saddle 56 are then secured firmly between the rails and the bolts securing the rails to the back axle are then tightened. The jigs extending between the front and rear ends of the rails can now be removed and the frame moved to the next assembly point on the line.

The above frame 12 results in a lightweight rugged semi-integrated structure for carrying implements on a vehicle which can be stressed in both bending and torsion without adverse effect on the chassis of the vehicle to which the frame 12 is attached while at the same time providing sufficient connection to the chassis of the vehicle to obtain all the advantages of an integrated frame. Thus, the frame 12 optimizes the advantages of the lightweight attachable type loader frames while providing the strength and ruggedness approaching that of an integrated frame.

**Claims**

1. A vehicle (10) for supporting earth handling implements (18, 20), said vehicle comprising a chassis provided by a rigid unitary assembly formed from an engine, transmission housing and back axle housing (110) and a frame (12) for supporting said implements and attached to said chassis, said frame comprising a pair of rails (58) arranged to extend longitudinally of the vehicle (10) in transversely spaced apart relation, first and second end portions on each rail, a pair of tower structures (54) attached one to each rail to extend upwardly from the rails at locations intermediate the end portions thereof, first interconnecting means (56) interconnecting and maintaining said first end portions of the rails in a fixed transversely spaced apart relation, second interconnecting means (118, 40) interconnecting and maintaining said second end portions in a fixed transversely spaced relation, first attachment means (92, 96) for connecting said first end portions to said chassis, and second attachment means (98) for attaching each rail to said back axle housing (110) intermediate said end portions, said vehicle being characterised in that a stabilizing means (128) is arranged to extend between said tower structures, and in that said first and second attachment means, said stabilizing means and said rails are arranged to flex to permit constrained movement of the rails and tower structures relative to said chassis under torsional loading and bending to permit load sharing between the chassis and frame.

2. A vehicle according to claim 1 characterised in that said stabilizing means includes a stabilizing plate (128) extending between said towers (54), said stabilizing plate having a hole (130) therein generally centrally located to relieve stress therein resulting from torsional loading of the frame (12).

3. A vehicle according to claim 2 characterised in that said stabilizing plate (128) has a generally Z-shaped cross-section when cut by a vertical plane extending generally longitudinally of the frame (12).

4. A vehicle according to claim 2 or claim 3 characterised in that the hole (130) has an elongated shape, the direction of said elongation being transverse relative to said frame (12).

5. A vehicle according to any one of claims 2 to 4 characterised in that said stabilizing means further includes a pair of flange plates (132) abutting the ends of said stabilizing plate (128), said flange plates being fixedly attached to said plate and connected (135) to said towers (54).

6. A vehicle according to claim 5 characterised in that said flange plates (132) are connected to said towers by bolts (135).

7. A vehicle according to any one of claims 1 to 6 characterised in that said second attachment means includes flexible members (98) which allow relative twisting movement between said rails (58) and back axle housing (110) during torsional loading of the frame (12).

8. A vehicle according to claim 7 characterised in that said flexible members (98) are L-shaped in form with one leg (102) thereof connected to said rails (58) and the other leg (106) connected to said back axle housing (110).

9. A vehicle according to claim 8 characterised in that said other leg (106) includes apertures (108) therein and said second attachment means includes bolts passing through the apertures in said other leg to affix said other leg to said back axle housing (110).

10. A vehicle according to claim 8 or claim 9 characterised in that the free edges (104) of said one leg (102) of each flexible member (98) are welded to the associated rail (58).

11. A vehicle according to any one of claims 1 to 10 characterised in that the second end portions of the rails (58) are provided with fastening means (112, 114) securing said second interconnecting means (118:40) in position, said fastening means including means (114) for carrying shear loads.

12. A vehicle according to claim 11 characterised in that said shear load carrying means comprise pins (114) engaging said rails and said second interconnecting means (118:40).

13. A vehicle according to claim 12 characterised in that said pins (114) are tapered (116) at one end thereof to facilitate engagement of said rail ends with said second interconnecting means (118:40).

14. A vehicle according to any one of claims 1 to 13 characterised in that said second interconnecting means is part of a backhoe structure (40).

15. A vehicle according to any one of claims 1 to 13 characterised in that said second interconnecting means is a counterweight (118).

16. A vehicle according to claim 14 or claim 15 characterised in that said fastening means includes bolts (119) detachably securing said second interconnecting means (118:40) to said rails (58).

17. A vehicle according to any one of claims 1 to 16 characterised in that said first attachment means comprises two rail brackets (92), one attached to each rail, and a chassis mounting plate (96) attached between the rail brackets.

18. A vehicle according to any one of claims 1 to 17 characterised in that said first interconnecting means comprises a steering axle support saddle (56) extending between said first end portions.

19. A vehicle according to any one of claims 1 to 18 characterised in that said rails (58) are structural channel-section members.

20. A vehicle according to claim 18 and claim 19 characterised in that said rails (58) are orientated with the bases of their channel sections extending substantially vertically and their side flanges extending substantially horizontally, the steering axle support saddle (56) being arranged to be secured to the bottom side flanges of the rails.

21. A vehicle according to any one of claims 1 to 20 characterised in that the rails (58) diverge apart so that the frame has a tapering configuration when viewed in plane, the frame having a greater width at its second end portions than at its first end portions.

22. A vehicle according to any one of claims 1 to 21 characterised in that the second end portion of each of the rails (58) adjacent said second interconnecting means (118:40) is reinforced by a gusset plate (148) which includes a pair of legs (156, 158) whose free ends extend towards the first end portion of the rail and are tapered in their direction of extension.

23. A method of assembling a vehicle according to claim 1, said method including the steps of:—

forming a first subassembly by securing a rail (58) and a tower (54) in an alignment jig and welding the tower to the rail;

forming a second similar subassembly by repeating the above step with a further rail and tower;

transporting the two subassemblies to the chassis;

loosely fastening each subassembly to the chassis;

fixing a jig between the first or second end portions of the rails;

canting the rails so that the frame has a longitudinally tapering configuration when viewed in plane;

fixing a further jig between the other end portions of the rails;

securing the stabilizing means (128) between the towers;

fastening the first (56) and second (118;40) interconnecting means between the end portions of the rails, and tightening the first and second attachment means.


**Patentansprüche**

1. Ein Fahrzeug (10) zum Tragen von Bodenbearbeitungsgeräten (18, 20), besagtes Fahrzeug ein Chassis umfassend, das sich aus einer starren Einheitsmontage zusammensetzt, die aus einem Motor, einem Transmissionsgehäuse und einem Hinterachsengehäuse (110) und einem Rahmen (12) zum Tragen besagter Geräte sich zusammensetzt und an besagtem Chassis befestigt ist, besagter Rahmen ein Paar Träger (58) umfassend, die angeordent sind, sich längs des Fahrzeugs (10) quer im Abstand voneinander zu erstrecken, am ersten und zweiten Endteil jedes Trägers ist ein Paar Turmaufbauten (54) befestigt, ein Paar für jeden Träger, die sich von den Trägern nach oben erstrecken, an Stellen, zwischen deren Endteilen liegend, erste Verbindung miteinander bedeutet (56) Verbindung miteinander und Beibehaltung besagter erster Endteile der Träger quer in festem Abstand voneinander, zweite Verbindung miteinander bedeutet (118, 40) Verbindung miteinander und Beibehaltung besagter zweiter Endteile der Träger quer in festem Abstand voneinander, erste Befestigung bedeutet (92, 96) Befestigung zur Verbindung erster Endteile an besagtem Chassis, und zweite Befestigung bedeutet (98) Befestigung jedes Trägers an besagtem Hinterachsengehäuse (110) zwischen besagten Endteilen liegend, besagtes Fahrzeug ist gekennzeichnet, indem eine Stützung bedeutet (128) angeordnet ist, sich zwischen besagten Turmaufbauten zu erstrecken, und indem besagte erste und zweite Befestigung, besagte Stützung bedeutet und besagte Träger sind angeordnet, sich zu biegen, um erzwungene Bewegung der Träger und Turmaufbauten in Bezug auf besagtes Chassis unter Torsionsbelastung und Biegung zu ermöglichen, um verteilte Belastung zwischen dem Chassis und dem Rahmen zu gestatten.

2. Ein Fahrzeug gemäß Anspruch 1 ist gekennzeichnet, indem besagte Stützung bedeutet schließt eine Stützplatte (128) ein, die sich zwischen besagten Türmen (54) erstreckt, besagte Stützplatte hat ein Loch (130) und liegt um dieses allgemein zentriert, um Spannung in ihr durch Torsionsbeanspruchung des Rahmens (12) zu erleichtern.

3. Ein Fahrzeug gemäß Anspruch 2 ist gekennzeichnet, indem besagte Stützplatte (128) einen allgemeinen Z — Querschnitt hat, wenn von einer Vertikalebene geschnitten, die sich allgemein entlang dem Rahmen (12) erstreckt.

4. Ein Fahrzeug gemäß Anspruch 2 oder Anspruch 3 gekennzeichnet, indem das Loch (130) eine verlängerte Form hat, wobei die Richtung besagter Verlängerung quer in Bezug auf besagten Rahmen (12) liegt.

5. Ein Fahrzeug gemäß irgendeinem der Ansprüche 2 bis 4 gekennzeichnet, indem besagte Stützung bedeutet schließt weiterhin ein Paar von Flanschplatten (132) ein, anstoßend an die Enden besagter Stützplatte (128), wobei besagte Flanschplatten an besagter Platte fest verbunden sind und mit besagten Türmen (54) verbunden sind (135).

6. Ein Fahrzeug gemäß Anspruch 5 gekennzeichnet, indem besagte Flanschplatten (132) an besagten Türmen durch Bolzen (135) befestigt sind.

7. Ein Fahrzeug gemäß jedem der Ansprüche 1 bis 6 gekennzeichnet, indem besagte zweite Befestigung bedeutet schließt biegsame Bauteile (98) ein, welche relative Verdrehungsbewegung zwischen besagten Trägern (58) und Hinterachsengehäuse (110) während Torsionsbelastung des Rahmens (12) gestatten.

8. Ein Fahrzeug gemäß Anspruch 7 gekennzeichnet, indem besagte Bauteile (98) L—Form haben, von denen eine Bein (102) mit besagten Trägern (58) verbunden ist und das andere Bein (106) mit besagtem Hinterachsengehäuse (110).

9. Ein Fahrzeug gemäß Anspruch 8 gekennzeichnet, indem das andere Bein (106) in sich Öffnungen (108) einschließt und besagte zweite Befestigung bedeutet schließt Bolzen ein, die durch die Öffnungen in besagtem anderen Bein hindurchgehen, um besagtes anderes Bein an besagtem Hinterachsengehäuse (110) zu befestigen.

10. Ein Fahrzeug, gekennzeichnet gemäß Anspruch 8 oder Anspruch 9, indem die freien Kanten (104) des einen besagten Beins (102) von jedem biegsamen Bauteil (98) an den dazugehörigen Träger (58) angeschweißt sind.

11. Ein Fahrzeug, gekennzeichnet gemäß jedes beliebigen Anspruchs 1 bis 10, indem die zweiten Endteile der Träger (58) mit Befestigung bedeutet (112, 114) versehen sind, welche besagte zweite Verbindung miteinander, bedeutet (118;40) in Stellung festhält, besagte Befesetigung bedeutet einschließlich bedeutet (114) zum Tragen von Scherbelastungen.

12. Ein Fahrzeug, gekennzeichnet gemäß Anspruch 11, indem Tragen besagter Scherbelastung bedeutet besteht aus Bolzen (114), die besagte Träger und besagte zweite Verbindung miteinander, bedeutet (118:40), befestigen.

13. Ein Fahrzeug, gekennzeichnet gemäß Anspruch 12, indem besagte Bolzen (114) an einem ihrer Enden konisch sind (116), um Befestigung besagter Trägerenden mit besagter zweiter Verbindung miteinander, bedeutet (118:40) zu erleichtern.

14. Ein fahrzeug, gekennzeichnet gemäß jedem beliebigen Anspruch 1 bis 13, indem besagte zweite Verbindung miteinander bedeutet ist Teil einer Schöpfbecherbauweise (40).

15. Ein Fahrzeug, gekennzeichnet gemäß jedem beliebigen Anspruch 1 bis 13, indem besagte zweite Verbindung miteinander bedeutet ist ein Gegengewicht (118).

16. Ein Fahrzeug, gekennzeichnet gemäß Anspruch 14 oder Anspruch 15, indem besagte Befestigung bedeutet schließt Bolzen (119) ein, die abnehmbar besagte zweite Verbindung miteinander, bedeutet (118:40) an besagten Trägern (58) befestigen.

17. Ein Fahrzeug, gekennzeichnet gemäß jedem beliebigen Anspruch von 1 bis 16, indem besagte erste Befestigung bedeutet besteht aus zwei Trägerstützen (92), eine an jedem der zwei Träger befestigt, und einer Chassismontageplatte (96), die zwischen den Trägerstützen befestigt ist.

18. Ein Fahrzeug, gekennzeichnet gemäß jedem beliebigen Anspruch von 1 bis 17, indem besagte erste Verbindung miteinander bedeutet besteht aus Lenkachsen Stützenauflager (56), das sich zwischen besagten ersten Endteilen erstreckt.

19. Ein Fahrzeug, gekennzeichnet gemäß jedem beliebigen Anspruch zwischen 1 bis 18, indem besagte Träger (58) Konstruktions-Profilbauteile sind.

20. Ein Fahrzeug, gekennzeichnet gemäß Anspruch 18 und Anspruch 19, indem besagte Träger (58) mit den Grundflächen ihrer Profile sich im wesentlichen vertikal erstrecken und mit ihren Seitenflanschen sich im wesentlichen horizontal erstrecken, indem die Lenkachsenauflagerstütze (56), an den unteren Seitenflanschen der Träger befestigt, angeordnet ist.

21. Ein Fahrzeug, gekennzeichnet gemäß jedem beliebigen Anspruch von 1 bis 20, indem die Träger (58) auseinanderlaufen, sodass der Rahmen keilförmig gestaltet ist, wenn in der Ebene gesehen, wobei der Rahmen eine größere Breite an seinen zweiten Endteilen als an seinen ersten Endteilen hat.

22. Ein Fahrzeug, gekennzeichnet gemäß jedem beliebigen Anspruch von 1 bis 21, in dem der zweite Endteil von jedem Träger (58) anliegend an besagter Verbindung miteinander bedeutet (118:40) durch ein Stützblech (148) verstärkt ist, welches ein Paar Beine (156, 158) einschließt, dessen freie Enden sich auf den ersten Endteil des Trägers erstrecken und sich in der Verlangerungsrichtung verjüngen.

23. Ein Verfahren zum Zusammenbau eines Fahrzeuges gemäß Anspruch 1, besagtes Verfahren schließt die Schritte ein zur:

Bildung einer ersten Teilmontage durch Befestigung eines Trägers (58) und eines Turms (54) in einer Ausrichtungsvorrichtung und Schweißen des Turms an den Träger;
Bildung einer zweiten ähnlichen Teilmontage durch Wiederholung obigen Schrittes mit einem weiteren Träger und Turm;
Transport der zwei Teilmontagen zu dem Chassis;
losen Befestigung jeder Teilmontage an dem Chassis;
Befestigung einer Vorrichtung zwischen den ersten oder zweiten Endteilen der Träger;
Neigen der Träger sodaß der Rahmen eine der Länge nach keilförmige Struktur hat, wenn in der Ebene gesehen;
Befestigung einer weiteren Vorrichtung zwischen den anderen Endteilen der Träger;
Befestigung der Abstützung bedeutet (128) zwischen den Türmen;
Befestigung der ersten (56) und der zweiten (118:40) Verbindung miteinander bedeutet zwischen den Endteilen der Träger, und Festziehen der ersten und zweiten Befestigungsmittel.

## Revendications

1. Véhicule (10) pour supporter des outils (18, 20) pour manier de la terre, ledit véhicule comportant un châssis formé par un ensemble unitaire rigide constitué par un moteur, un boîte de vitesse et un carter de pont arrière (110) et un bâti (12) pour supporter lesdits outils et fixé sur ledit châssis, ledit bâti comprenant une paire de rails (58) agencés de manière à s'étendre suivant la direction longitudinale du véhicule (10) en étant espacés transversalement l'un de l'autre, des première et seconde parties extrêmes, sur chaque rail, une paire de structures en forme de colonnes (54) respectivement fixées sur un rail de manière à s'étendre vers le haut à partir des rails en des endroits situés entre leurs parties extrêmes, des premiers moyens d'interconnexion (56) interconnectant et maintenant lesdites premières parties extrêmes des rails écartées transversalement d'une distance déterminée, des seconds moyens d'interconnexion (118;40) interconnectant et maintenant lesdites secondes parties extrêmes des rails écartées transversalement d'une distance déterminée, des premiers moyens de fixation (92, 96) pour coupler lesdites premières parties extrêmes audit châssis, et des seconds moyens de fixation (98) pour fixer chaque rail sur ledit carter de pont arrière (110) entre lesdites parties extrêmes, ledit véhicule étant caractérisé en ce que des moyens stabilisateurs (128) sont agencés de manière à s'étendre entre lesdites structures en forme de colonnes, et en ce que lesdits premiers et seconds moyens de fixation, lesdits moyens stabilisateurs et lesdits rails sont agencés de manière à pouvoir fléchir de façon à permettre un mouvement limité des rails et des structures en forme de colonnes par rapport audit châssis sous l'action de forces de torsion et de flexion afin de permettre le partage des charges entre le châssis et le bâti.

2. Véhicule suivant la revendication 1, caractérisé en ce que lesdits moyens stabilisateurs comportent une plaque stabilisatrice (128) s'étendant entre lesdites colonnes (54), ladite plaque stabilisatrice comportant un trou (130) situé sensiblement au centre pour éliminer les contraintes résultant d'une charge de torsion du bâti (12).

3. Véhicule suivant la revendication 2, caractérisé en ce que ladite plaque stabilisatrice (128) possède une section transversale en forme de Z lorsqu'elle est coupée par un plan vertical s'étendant généralement suivant la direction longitudinale du bâti (12).

4. Véhicule suivant la revendication 2 ou la revendication 3, caractérisé en ce que le trou (130) possède une forme allongée, la direction d'allongement étant transversale par rapport audit bâti (12).

5. Véhicule suivant l'une quelconque des revendications 2 à 4, caractérisé en ce que lesdits moyens stabilisateurs comportent en outre une paire de plaques à rebord (132) en aboutement avec les extrémités de ladite plaque stabilisatrice (128), lesdites plaques à rebord étant fixées rigidement sur ladite plaque et reliées (en 135) auxdites colonnes (54).

6. Véhicule suivant la revendication 5, caractérisé en ce que lesdites plaques à rebord (132) sont reliées auxdites colonnes par des boulons (135).

7. Véhicule suivant l'une quelconque des revendications 1 à 6, caractérisé en ce que les seconds moyens de fixation comportent des organes flexibles (98) qui permettent un mouvement de torsion relatif entre lesdits rails (58) et le carter de pont arrière (110) pendant une charge de torsion du bâti (12).

8. Véhicule suivant la revendication 7, caractérisé en ce que lesdits organes flexibles (98) sont en forme de L, une branche (102) étant couplée auxdits rails (58) et l'autre branche (106) étant couplée au carter de pont arrière (110).

9. Véhicule suivant la revendication 8, caractérisé en ce que l'autre branche (106) comporte des ouvertures (108) et que les seconds moyens de fixation comportent des boulons traversant les ouvertures ménagées dans ladite autre branche pour fixer ladite autre branche sur ledit carter de pont arrière (110).

10. Véhicule suivant la revendication 8 ou la revendication 9, caractérisé en ce que les bords libres (104) de la première branche (102) de chaque organe flexible (98) sont soudés sur le rail associé (58).

11. Véhicule suivant l'une quelconque des revendications 1 à 10, caractérisé en ce que les secondes parties extrêmes des rails (58) sont munies de moyens de fixation (112, 114) fixant lesdits seconds moyens d'interconnexion (118;40) en position, lesdits moyens de fixation comprenant des moyens (114) pour supporter des charges de cisaillement.

12. Véhicule suivant la revendication 11, caractérisé en ce que lesdits moyens pour supporter des charges de cisaillement comportent des broches (114) coopérant avec lesdits rails et lesdits seconds moyens d'interconnexion (118;40).

13. Véhicule suivant la revendication 12, caractérisé en ce que lesdites broches (114) sont coniques (116) à une de leurs extrémités pour faciliter l'entrée en contact desdites extrémités des rails avec les seconds moyens d'interconnexion (118;40).

14. Véhicule suivant l'une quelconque des revendications 1 à 13, caractérisé en ce que les seconds moyens d'interconnexion font partie de la structure d'une pelle rétrocaveuse (40).

15. Véhicule suivant l'une quelconque des revendications 1 à 13, caractérisé en ce que lesdits seconds moyens d'interconnexion sont constitués par un contrepoids (118).

16. Véhicule suivant la revendication 14 ou la revendications 15, caractérisé en ce que lesdits moyens de fixation comportent des boulons (119) fixant de façon amovible lesdits seconds moyens d'interconnexion (118;40) sur lesdits rails (58).

17. Véhicule suivant l'une quelconque des revendications 1 à 16, caractérisé en ce que lesdits premier moyens de fixation comportent deux supports (92), un fixé sur chaque rail, et une plaque de montage (96) du châssis fixée entre les supports.

18. Véhicule suivant l'une quelconque des revendications 1 à 17, caractérisé en ce que lesdits premiers moyens d'interconnexion comportent une selle de support (56) de l'essieu de direction s'étendant entre lesdites premières parties extrêmes.

19. Véhicule suivant l'une quelconque des revendications 1 à 18, caractérisé en ce que lesdits rails (58) sont constitués par des profilés possédant une section en forme de U.

20. Véhicule suivant la revendication 18 et la revendication 19, caractérisé en ce que lesdits rails (58) sont orientés de manière que les âmes des U s'étendent sensiblement verticalement et que leurs rebords latéraux s'étendent sensiblement horizontalement, la selle de support (56) de l'essieu de direction étant agencée de manière à être fixée sur les rebords latéraux inférieurs des rails.

21. Véhicule suivant l'une quelconque des revendications 1 à 20, caractérisé en ce que les rails (58) divergent de manière que le bâti posséde une configuration allant en rétrécissant vue en plan, le bâti possédant une largeur plus importante au niveau de ses secondes parties extrêmes qu'au niveau de ses premières parties extrêmes.

22. Véhicule suivant l'une quelconque des revendications 1 à 21, caractérisé en ce que la seconde partie extrême de chacun des rails (58) au voisinage desdits seconds moyens d'interconnexion (118;40) est renforcée par une plaque formant gousset (148) qui comporte une paire de branches (156, 158) dont les extrémités libres s'étendent en direction de la première partie extrême du rail et vont en s'effilant dans la direction de leur prolongement.

23. Procédé pour assembler un véhicule suivant la revendication 1, procédé consistant à:
—former un premier sous-ensemble en fixant un rail (58) et une colonne (54) dans un gabarit d'alignement et souder la colonne sur le rail;
—former un second sous-ensemble similaire en répétant l'opération ci-dessus avec un autre rail et une autre colonne;
—transporter les deux sous-ensembles vers le châssis;
—fixer sans serrer chaque sous-ensemble sur le châssis;
—placer un gabarit entre les premières ou secondes parties extrêmes des rails;
—incliner les rails de manière que le bâti présente une configuration allant en se rétrécissant suivant la direction longitudinale vue en plan;
—placer un autre gabarit entre les autres parties extrêmes des rails;
—fixer les moyens stabilisateurs (128) entre les colonnes;
—fixer les premiers (56) et les seconds (118;40) moyens d'interconnexion entre les parties extrêmes des rails, et serrer les premiers et seconds moyens de fixation.

Fig-1

Fig-9

Fig-10

Fig-2

Fig-4

Fig-5

0 000 281

Fig-3

Fig-6

Fig-7

Fig-8

F →